# EUROPÄISCHE PATENTSCHRIFT

(11) **EP 2 627 537 B1**
(45) Veröffentlichungstag und Bekanntmachung des Hinweises auf die Patenterteilung: **15.02.2017**
(21) Anmeldenummer: 10787771.4
(22) Anmeldetag: 08.12.2010
(51) Int. Cl.: B60R 3/02

(54) **RAMPE MIT SEITLICHER BARRIERE**
RAMP HAVING A SIDE BARRIER
RAMPE COMPORTANT UNE BARRIÈRE LATÉRALE

(30) Priorität: 13.10.2010 DE 102010048178
(43) Veröffentlichungstag der Anmeldung: 21.08.2013
(73) Patentinhaber: Gebr. Bode GmbH & Co. KG, 34123 Kassel (DE)
(72) Erfinder: RASEKHI, Abbas, 34128 Kassel (DE)
(74) Vertreter: Patentanwälte Bauer Vorberg Kayser
(86) Internationale Anmeldenummer: PCT/EP2010/069191
(87) Internationale Veröffentlichungsnummer: WO 2012/048759

(56) Entgegenhaltungen:
- EP-A1- 1 946 968
- WO-A1-2010/072585
- WO-A2-2006/031484
- GB-A- 2 405 852

## Beschreibung

Die Erfindung betrifft einen Schiebetritt eines Türeinstiegs eines Personenbeförderungsfahrzeuges, wobei der Schiebetritt aus einer Ruhestellung in eine Gebrauchsstellung und zurück verfahrbar ist.

Derartige Schiebetritte werden bei Fahrzeugen zur Personenbeförderung, beispielsweise bei Bussen oder Schienenfahrzeugen des öffentlichen Nahverkehrs eingesetzt. Sie sind in vielfältiger Form bekannt und erleichtern den Ein- und Ausstieg dadurch, dass im Bereich von Haltestellen an den Fahrzeugen verschiebbar und oftmals auch verschwenkbar gelagerte und belastbare Schiebetritte ausgefahren werden. Schiebetritte werden dabei zur Überbrückung von Spalten (beispielsweise bei Bahnsteigen) oder auch zum Höhertausgleich eingesetzt. Zustiegshilfen können als lediglich ausfahrbare Schiebetritte ausgeführt sein, sie können aber im ausgefahrenen Zustand auch auf den Untergrund, beispielsweise einem Bahnsteig abgesenkt werden, so dass sie aufliegen. Zustiegshilfen erleichtern oder ermöglichen insbesondere auch Rollstuhlfahrern den Zugang in die Fahrzeuge. Nach Beendigung der Aus- und Einstiegsphase und eventuell nach dem Schließen der Fahrzeugtüren wird die Zustiegshilfe wieder in ihre Ruhestellung zurückgebracht.

Schiebetritte, die im ausgefahrenen Zustand nicht aufliegen und entsprechend belastbar sein müssen, werden in der Regel als Schiebetritte bezeichnet. Diese bestehen in der Regel aus einem widerstandsfähigen und starren, aber möglichst leichten Material und sind in der Regel mit einer rutschhemmenden Auflage versehen.

Im Bereich des Schiebetritts ist bei fremdbetriebenen Zustiegshilfen ein Motor vorgesehen, der den Schiebetritt aus seiner Ruhestellung in die Gebrauchsstellung heraus- und wieder zurückfährt. Begehbare Schiebetritte sind seitlich über Rollen in Führungsmitteln geführt, über die sie linear ein- und ausgefahren werden können. Motorisch betriebene Schiebetritte sind dem Oberbegriff entsprechend beispielsweise in den Druckschriften DE 20 2007 000 912 U1 und DE 20 2006 016 432 U1 beschrieben. Diese bauen alle verhältnismäßig hoch, was zunehmend unerwünscht ist. Fahrzeughersteller richten aufgrund ständig wachsender Anforderungen besondere Aufmerksamkeit auf Schiebetritte, insbesondere auf den für diesen notwendigen Einbauraum im kritischen Eingangsbereich.

Ein wesentlicher Nachteil bekannter Schiebetritte besteht auch darin, dass ein seitliches Abrutschen oder ein Fehltreten der Benutzer beim Aus-oder Einsteigen möglich ist. Insbesondere für Rollstuhlfahrer ist die Nutzung des Schiebetritts deshalb bzw. sogar gefährlich.

Aus diesem Grund sind Schiebetritte bekannt, die seitliche Barrieren in Höhe von mehreren Zentimetern aufweisen. Derartige Barrieren sind wie eine Art Geländer an Seitenkanten der Zustiegshilfe angeordnet. Ein wesentlicher Nachteil besteht darin, dass die Zustiegshilfen durch die seitlichen Barrieren höher bauen und entsprechend größer dimensionierte Aufnahmekästen unterhalb der Tür des Fahrzeugs benötigen.

Die Aufgabe der Erfindung besteht daher mit, einen Schiebetritt für Kraftfahrzeuge zu schaffen, der einen sicheren und rollstuhlgerechten Zustieg in die Fahrzeuge ermöglicht. Der Schiebetritt soll dabei möglichst einfach aufgebaut und dabei möglichst kompakt ausgeführt sein. Die o.g. Nachteile des Standes der Technik sollen vermieden werden.

Erfindungsgemäß wird die Aufgabe durch einen Schiebetritt gelöst, bei dem das flächige Element an seinen Seitenkanten Barrieren aufweist, die von einer ersten aufgerichteten Position, in der sie gegenüber einer Trittfläche des flächigen Elements hochstehen, in eine zweite abgesenkte Position und umgekehrt bewegbar sind, wobei die Bewegung der Barrieren durch die Bewegung des flächigen Elements bewirkt wird.

Der Schiebetritt ist durch ein flächiges Element bzw. einen Ausschub mit zwei Seitenkanten, einer Vorderseite, die beispielsweise auf einem Bahnstieg aufliegen kann, und einer Rückseite, die in Richtung des Fahrzeugs weist, gebildet, wobei sich im Bereich der beiden Seitenkanten die seitlichen Barrieren befinden. Die nach oben gerichtete Fläche des flächigen Elementes bildet eine Trittfläche aus.

Die seitlichen Barrieren wirken wie eine Art Geländer und weisen eine Höhe von einem bis mehreren, vorzugsweise fünf Zentimetern auf. Üblicherweise sind zwei Barrieren, an jeder Seitenkanten eine Barriere vorgesehen, denkbar ist aber auch ein Schiebetritt, bei der nur an einer Seitenkante eine Barriere angeordnet ist. Erfindungsgemäß sind die seitlichen Barrieren derart ausgeführt, dass sie sich beim Einfahren bzw. Zurückziehen des Schiebetritts in eine abgesenkte Position absenken, damit die Gesamthöhe des Schiebetritts im Wesentlichen auf die Höhe des flächigen Elements beschränkt ist. Dies ist insbesondere dann von Vorteil, wenn der Schiebetritt in einen Kasten eingefahren wird. Beim Herausfahren des Schiebetritts stellen sich die Barrieren in eine aufgerichtete Position auf. Die Bewegungsrichtung des Schiebetritts verläuft dabei üblicherweise in eine parallel zu den Seitenkanten verlaufende Richtung.

In einer besonders vorteilhaften Variante sind die beiden Barrieren jeweils durch eine Barrierestange gebildet, die über zumindest einen, vorzugsweise mehrere Barrierearme mit dem flächigen Element bzw. dem Ausschub verbunden ist. Die Barrierearme sind gelenkig sowohl am Ausschub als auch an der Barrierestange angeschlagen und ermöglichen ein Verschwenken und somit ein Aufstellen und Absenken der Barrierestange. Weiterhin ist entweder die Barrierestange oder ein Barrierearm, vorzugsweise der dem Fahrzeug nächstliegende Barrierearm, über einen Barrierelenker mit dem Fahrzeug verbunden, so dass beim Bewegen des Ausschubs automatisch ein Aufrichten bzw. Absenken der Barrieren erfolgt. Die Verbindung des Barrierelenkers mit dem Fahrzeug erfolgt an einem ortsfesten Bauteil, das den Barrierelenker zumindest dann kontaktiert und hält, wenn sich das flächige Element kurz vor und in seiner ausgefahrenen Endposition befindet.

Der Barrierelenker kann als Bauteil derart ausgeführt sein, dass er beim Aus- und Einfahren des Schiebetritts mitbewegt wird. Beim Ausfahren wird er bis zu einer Endlage bewegt. Dadurch, dass das flächige Element weiter aus dem Kasten heraus bewegt wird, zieht der Barrierelenker die mit ihm verbundene Barriere hoch, so dass sie sich mit Hilfe der Barrierearme aufstellt.

Vorzugsweise weist der Schiebetritt einen Kasten zur Aufnahme des Ausschubes mit den abklappbaren Barrieren auf. Der Kasten kann an seiner beispielsweise einem Bahnsteig zugewandten Seite offen sein, er kann aber auch mithilfe einer Klappe verschließbar ausgeführt sein. Ist eine Klappe vorgesehen, öffnet sich diese, bevor der Ausschub aus dem Kasten ausgefahren wird bzw. schließt sich die Klappe nach vollständigem Einfahren des Ausschubes wieder. Seitenwände des Kastens und der Ausschub können Führungsmittel aufweisen, um ein gleichmäßiges ausfahren des Ausschubes zu gewährleisten. Vorzugsweise kann innerhalb des Kastens eine Führungsschiene vorgesehen sein, in der beispielsweise Rollen, die an Seitenkanten des Ausschubes angeordnet sind, geführt werden.

Vorzugsweise sind beide Barrieren mit einem Barrierenlenker versehen, denkbar ist aber auch, dass nur eine der Barrieren einen Barrierenlenker aufweist und die gegenüberliegende weitere Barriere durch einen entsprechenden Mechanismus, der die beiden Barrieren miteinander verbindet, mit aufgerichtet oder abgesenkt wird. Erfindungsgemäß ist der bzw. sind die Barrierenlenker mit dem Ausschub verbunden und ebenfalls in einer Führungsschiene geführt, so dass sich der Barrierelenker mit dem Ausschub vor- und zurückbewegt. Hierzu weist der Barrierenlenker eine entsprechende Laufrolle oder ein vergleichbares Führungsmittel auf, dass in der jeweiligen Barriereführungsschiene läuft. Bevor der Ausschub beim Ausfahren vollständig aus dem Kasten ausgefahren ist bzw. seine Endposition erreicht hat, stößt die Laufrolle ans Ende der Barriereführungsschiene oder an ein entsprechendes Element an und verbleibt dort in ihrer Position. Das Ende der Barriereführungsschiene kann somit das ortsfeste Bauteil ausbilden, über das die Barriere aufgerichtet wird.

Anstelle einer Führung des Barrierelenkers und einer Barriereführungsschiene ist vorteilhafterweise auch denkbar, dass der Barrierelenker als Fanghaken ausgebildet ist, der sich beim Ausfahren des flächigen Elements an einem Bolzen ein hakt und somit in seiner Endlage verbleibt und die Barriere aufstellt. Der Fanghaken ist derart geformt, dass er den Bolzen lediglich hintergereift, so dass er sich beim Einfahren des Ausschubs problemlos vom Bolzen lösen und zurück in seine Ausgangsposition bewegen kann.

In einer weiteren erfindungsgemäßen Ausführungsvariante ist der Barrierelenker im Wesentlichen L-förmig ausgeführt, weist also einen Knick auf, der einen längeren Abschnitt und einen kürzeren Abschnitt trennt. Das Ende des längeren Abschnitts ist mit der Barriere verbunden, am Ende des kürzeren Abschnitts ist die Laufrolle angeordnet. Weiterhin ist auch bei dieser Konstruktion ein ortsfester Bolzen vorgesehen, der das Absenken und das Aufrichten der Barriere unterstützt. Der Bolzen ist in Seitenansicht unterhalb der Barriereführungsschiene angeordnet. Beim Ausfahren erreicht der bis dahin im Wesentlichen horizontal angeordnete Barrierelenker den Bolzen und geleitet an diesem entlang, bis der Bolzen den Knick des L-förmigen Barrierelenkers erreicht. In dieser Position hat auch die Laufrolle ihre Endlage in der Barriereführungsschiene erreicht. Das weitere Ausfahren des flächigen Elements bzw. Ausschubes bewirkt nun, dass sich die Barriere in die aufgerichtete Position bewegt. Die L-Form des Barrierelenkers bewirkt den Vorteil, dass der Bolzen beim Einfahren schräg von oben auf den Barrierelenker drückt und somit das Einklappen der Barriere erleichtert. Die Schräglage des Barrierelenkers verhindert, dass sich die Barriere in einer Übertodpunktlage nicht oder nur sehr schwierig ein-bzw. umklappen lässt.

Der ortsfeste Bolzen und auch die Barriereführungsschiene können sowohl innerhalb eines Kastens als auch unmittelbar am Fahrzeug angeordnet sein.

Die Barrierearme können entweder auf der nach oben gerichteten Trittfläche des flächigen Elements angelenkt, sie können aber auch seitlich an den Seitenkanten gelagert sein. Sind sie seitlich angeordnet und beispielsweise über Bolzen oder Stifte gelenkig gelagert, hat dies den Vorteil, dass die Barrieren in der abgesenkte Position nicht nach oben oder unten über die Höhe des flächigen Elements vorstehen, das flächige Element bzw. Zustiegshilfe ist dann im abgesenkten Zustand der Barrieren nicht höher, sondern lediglich um den Betrag der beiden Barrieren breiter. Sind die Barrierearme dagegen auf der Trittfläche angeordnet, ist das flächige Element im abgesenkten Zustand der Barrieren nicht breiter, sondern etwas höher. Beide Ausführungsvarianten können je nach räumlichen Bedingungen vorteilhaft sein.

Wesentlich für alle Ausführungsform ist, dass die Bewegung der Barrieren durch die Bewegung des flächigen Elements bewirkt wird.

Im Folgenden wird die Erfindung anhand der Figuren näher erläutert. Die Figuren sollen dabei lediglich ein Ausführungsbeispiel erläutern und die Erfindung nicht auf die darin gezeigten Details beschränken. Es zeigen:
- Figur 1:: eine stark vereinfachte Prinzipdarstellung des erfindungsgemäßen Schiebetritts in Seitenansicht,
- Figur 2:: ein Verlaufsschema des Ein-bzw. Ausfahrens des flächigen Elementes,
- Figur 3:: eine Ausführungsvariante der Erfindung mit zum Teil ausgefahrenem flächigem Element,
- Figur 4:: die Ausführungsvariante aus Figur 3 mit fast vollständig ausgefahrenem flächigem Element,
- Figur 5:: die Ausführungsvariante aus Figur 3 mit ausgefahrenem flächigem Element in Endposition.

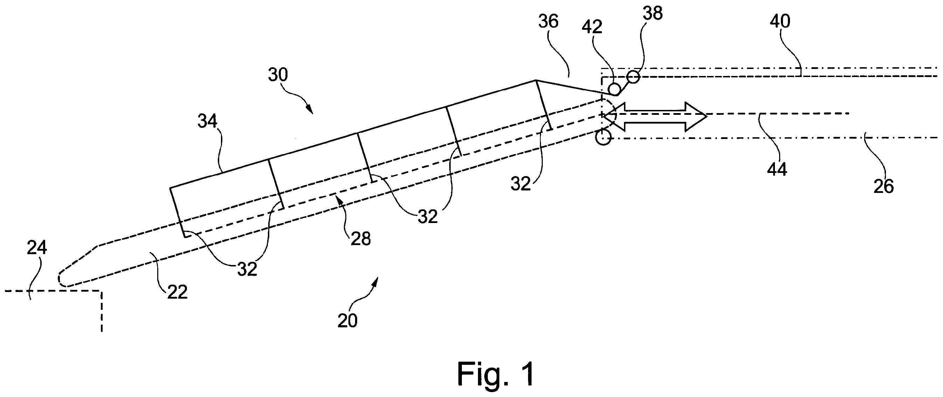

Figur 1 zeigt einen erfindungsgemäßen Schiebetritt 20 in vereinfachter Darstellung in Seitenansicht. Ein Ausschub bzw. flächiges Element 22 dient im gezeigten Beispiel der Überbrückung eines Spalts und liegt zu diesem Zweck auf einem Bahnsteig 24 auf. Das flächige Element 22 kann in einen Kasten 26 ein- und aus diesem heraus bewegt werden. Die Bewegungsrichtung verläuft dabei entlang von Seitenkanten 28 des flächigen Elements 22 und ist durch einen Pfeil dargestellt.

An der Seitenkante 28 ist eine Barriere 30 angeordnet, die im gezeigten Ausführungsbeispiel fünf Barrierearme 32 aufweist, die schwenkbar an der Seitenkante 28 gelagert sind. An ihren anderen Enden sind die Barrierearme 32 einer Barrierestange 34 ebenfalls gelenkig verbunden. Über einen Barrierelenker 36 steht die Barriere 30 mit dem Kasten 26 in Verbindung. Am Ende des Barrierelenkers 36 ist eine Laufrolle 38 angeordnet, die in einer Barrierenführungsschiene 40 geführt ist. Der Barrierelenker 36 ist L-förmig ausgeführt und steht mit einem Bolzen 42, der am Kasten 26 befestigt ist, in Kontakt. Das flächige Element 22 ist ebenfalls in einer Führungsschiene 44 geführt.

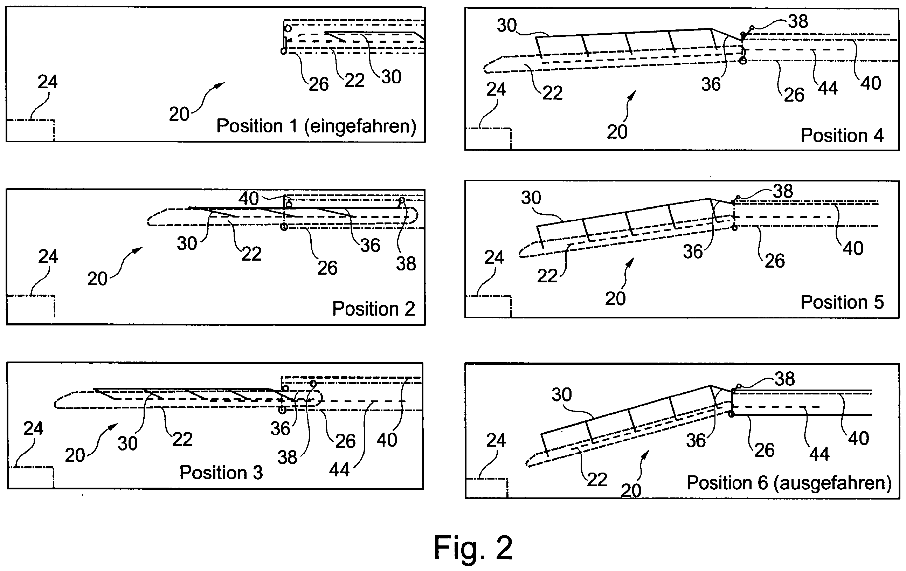

Aus Figur 2 ergibt sich die Funktionsweise des erfindungsgemäßen Schiebetritts 20. In Position A ist das flächige Element 22 vollständig eingefahren und in Position F vollständig ausgefahren. Die Positionen B, C, D und E zeigen Zwischenzustände des Ein- bzw. Ausfahrvorgangs. Erkennbar ist, dass sich der Barrierelenker 36 und die Laufrolle 38 mit dem flächigen Element 22 mitbewegen. Erreicht die Laufrolle 38 beim Ausfahren des flächigen Elementes 22 das Ende der Barriereführungsschiene 40, wird das flächige Element 22 weiter ausgefahren, wodurch die Barriere 30 durch den Barrierelenker 36 aufgestellt wird. In umgekehrter Richtung, also beim Einfahren des flächigen Elements 22, drückt der Bolzen 42 auf den Barrierelenker 36, wodurch die Barriere 30 eingeschwenkt wird.

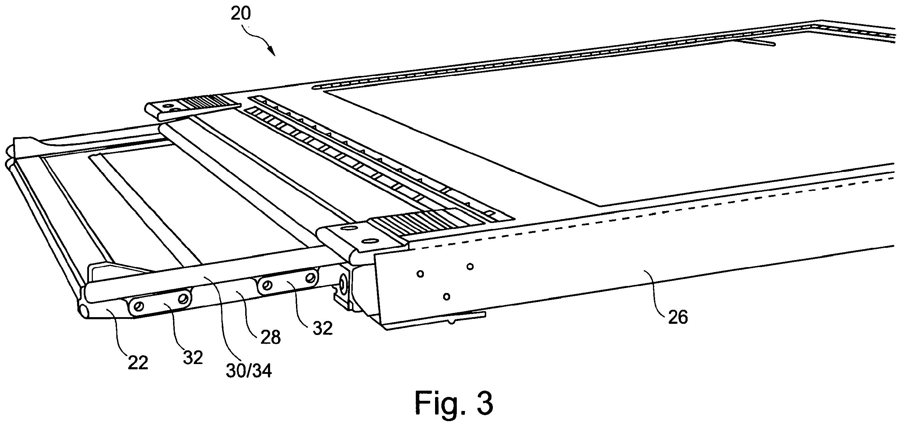

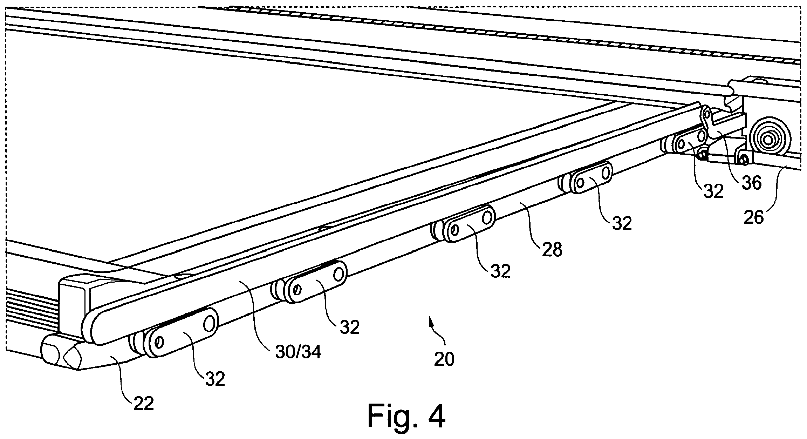

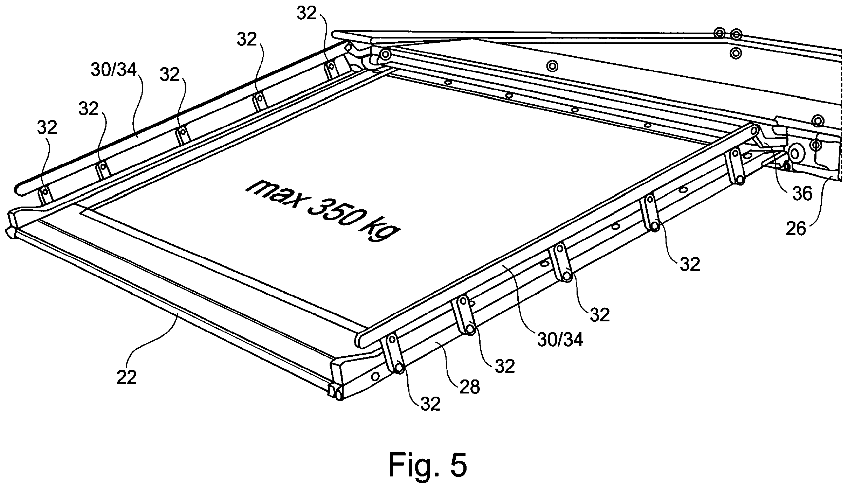

Die Figuren 3-5 zeigen eine bevorzugte Ausführungsvariante der Erfindung. Figur 3 zeigt das flächige Element 22 in fast vollständig eingefahrenen Zustand, Figur 4 das flächige Element 22 kurz vor der vollständig ausgefahrenen Position und Figur 5 das flächige Element in ausgefahrener Endposition. In der Position gemäß Figur 4 befindet sich die Laufrolle 38 am in Ausfahrrichtung vorderen Ende der Barriereführungsschiene 40. Der Barrierelenker 36 ist in dieser Ausführungsvariante zwar auch L-förmig geformt, unterscheidet sich aber vom Barrierelenker 36 der Figuren 1 und 2. Die Barrieren 30 können in aufgerichtete Position je nach Einbaubedingungen unterschiedlich hoch sein, eine Höhe von etwa 5 cm hat sich als vorteilhaft und ausreichend für die Gewährleistung der Sicherheit für die Benutzer erwiesen.

Durch den Klappmechanismus kann der Schiebetritt 20 ausgesprochen flach ausgeführt sein bzw. baut sie nicht höher als ein Schiebetritt 20 ohne Barriere 30.

Der Antrieb des flächigen Elements 22 kann verschieden ausgeführt sein, z.B. durch seitliche Spindeln, welche neben dem Antrieb ebenfalls die Funktion der Führung übernehmen, oder auch durch einen zentralen Antrieb, welcher zusätzliche (z.B. seitliche) Führungsmittel erfordert. Weitere Antriebsmöglichkeiten sind ebenfalls realisierbar, auf diese wird jedoch im Rahmen dieser Patentanmeldung nicht eingegangen.

Wie bereits ausgeführt, eignet sich der erfindungsgemäße Klappmechanismus der Barrieren 30 für sämtliche ausfahrbaren Zustiegshilfen, wobei die Nutzung mit einem Schiebetritt 22 sicherlich als bevorzugte Ausführungsvariante anzusehen ist. Die Erfindung ist aber nicht auf das gezeigte Ausführungsbeispiel beschränkt

## Patentansprüche

1. Schiebetritt (20) eines Türeinstiegs eines Personenbeförderungsfahrzeuges, aufweisend
- ein flächiges Element (22),
- eine Vorderseite,
- zwei Seitenkanten (28), und
- eine Rückseite,
wobei das flächige Element (22) aus einer Ruhestellung in eine Gebrauchsstellung und zurück in einer parallel zu den Seitenkanten (28) verlaufenden Richtung verfahrbar ist.
**dadurch gekennzeichnet, dass**
das flächige Element (22) an seinen Seitenkanten (28) Barrieren (30) aufweist, die von einer ersten aufgerichteten Position, in der sie gegenüber einer Trittfläche des flächigen Elements (22) hochstehen, in eine zweite abgesenkte Position und umgekehrt bewegbar sind, wobei die Bewegung der Barrieren (30) durch die Ein- und Ausfahrbewegung des flächigen Elements (22) in der parallel zu den Seitenkanten (28) verlaufenden Richtung bewirkt wird.

2. Schiebetritt (20) nach Anspruch 1, **dadurch gekennzeichnet, dass** die Barrieren (30) jeweils eine Barrierestange (34) und zumindest einen Barrierearm (32) aufweisen, wobei der Barrierearm (32) an dem flächigen Element (22) und an der Barrierestange (34) verschwenkbar gelagert ist, so dass die Barriere (30) aufricht- und absenkbar ist.

3. Schiebetritt (20) nach Anspruch 2, **dadurch gekennzeichnet, dass** die Barrieren (30) einen Barrierelenker (36) aufweisen, der zumindest in der ersten aufgerichteten Position mit dem ortsfesten Bauteil des Fahrzeugs in Kontakt steht, wobei das ortsfesten Bauteil derart angeordnet ist, dass der Barrierelenker (36) beim Ausfahren des flächigen Elements (22) vor Erreichen der Endposition des flächigen Elements (22) bereits am ortsfesten Bauteil gehalten wird und die weitere Ausfahrbewegung des flächigen Elements (22) eine Bewegung der Barriere (30) bewirkt.

4. Schiebetritt (20) nach Anspruch 3, **dadurch gekennzeichnet, dass** der Barrierelenker (36) an seinem freien Ende eine Laufrolle (38) aufweist, die in einer Barriereführungsschiene (40) geführt ist und das ortsfesten Bauteil durch einen Endanschlag der Barriereführungsschiene (40) in Ausfahrrichtung des flächigen Elements (22) gebildet ist.

5. Schiebetritt (20) nach Anspruch 3 oder Anspruch 4, **dadurch gekennzeichnet, dass** der Barrierelenker (36) L- förmig ausgebildet ist.

6. Schiebetritt (20) nach Anspruch 5, **dadurch gekennzeichnet, dass** das ortsfeste Bauteil in Seitenansicht der Zustiegshilfe (20) unterhalb der Barriereführungsschiene (40) angeordnet ist und den Barrierelenker (36) von oben kontaktiert.

7. Schiebetritt (20) nach einem Ansprüche 1 bis 6, **dadurch gekennzeichnet, dass** der zumindest eine Barrierearm (32) derart an einer der Seitenkanten (28) angelenkt ist, dass sich die Barriere (30) in der zweiten abgesenkten Position vollständig seitlich neben dem flächigen Element (22) befindet und die Höhe des flächigen Elements (22) nicht übersteigt.

8. Schiebetritt (20) nach einem Ansprüche 1 bis 7, **dadurch gekennzeichnet, dass** ein Kasten (26) zur Aufnahme des flächigen Elements (22) vorgesehen ist, wobei innerhalb des Kastens (26) die Barriereführungsschiene (40) und/oder das ortsfeste Bauteil angeordnet sind.

## Claims

1. A sliding step (20) of a door entrance of a passenger transportation vehicle, comprising:
- a planar element (22),
- a front side,
- two lateral edges (28), and
- a rear side,
the planar element (22) being movable from an idle position into a usage position and back in a direction extending parallel to the lateral edges (28),
**characterized in that**
the planar element (22) has, on its lateral edges (28), barriers (30) that are movable from a first raised position, in which they extend upwards in relation to a stepping surface of the planar element (22), into a second lowered position and vice versa, the movement of the barriers (30) being caused by the retracting and extending movement of the planar element (22) in the direction extending parallel to the lateral edges (28).

2. The sliding step (20) according to claim 1, **characterized in that** each of the barriers (30) has a barrier bar (34) and at least one barrier arm (32), the barrier arm (32) being pivotably supported on the planar element (22) and on the barrier bar (34), so that the barrier (30) can be raised and lowered.

3. The sliding step (20) according to claim 2, **characterized in that** the barriers (30) have a barrier link (36) which, at least in the first raised position, is in contact with the stationary component of the vehicle, the stationary component being arranged such that the barrier link (36) is already held on the stationary component during the extension of the planar element (22) prior to reaching the end position of the planar element (22) and that the further extending movement of the planar element (22) causes a movement of the barrier (30).

4. The sliding step (20) according to claim 3, **characterized in that** the barrier link (36) has, at its the free end, a guiding roller (38) which is guided in a barrier guide rail (40), and that the stationary component is formed by an end stop of the barrier guide rail (40) in the extending direction of the planar element (22).

5. The sliding step (20) according to claim 3 or claim 4, **characterized in that** the barrier link (36) is configured in an L-shape.

6. The sliding step (20) according to claim 5, **characterized in that**, in a side view of the boarding aid (20), the stationary component is arranged below the barrier guide rail (40) and contacts the barrier link (36) from above.

7. The sliding step (20) according to any one of the claims 1 to 6, **characterized in that** the at least one barrier arm (32) is hinged to one of the lateral edges (28) in such a way that, in the second lowered position, the barrier (30) is located fully laterally next to the planar element (22) and does not exceed the height of the planar element (22).

8. The sliding step (20) according to any one of the claims 1 to 7, **characterized in that** a box (26) for accommodating the planar element (22) is provided, the barrier guide rail (40) and/or the stationary component being disposed within the box (26).

## Revendications

1. Marchepied coulissant (20) d'une entrée de porte d'un véhicule de transport de personnes, comprenant
- un élément plat (22),
- une face avant,
- deux bords latéraux (28) et
- une face arrière,
dans lequel ledit élément plat (22) peut être déplacé depuis une position de repos dans une position d'utilisation et inversement dans une direction s'étendant parallèlement aux bords latéraux (28),
**caractérisé par le fait que** ledit élément plat (22) présente des barrières (30) sur ses bords latéraux (28), que l'on peut faire passer d'une première position relevée dans laquelle elles font saillie vers le haut par rapport à une surface de marche de l'élément plat (22), à une deuxième position abaissée et inversement, le mouvement des barrières (30) étant provoqué par le mouvement de rétraction et de sortie de l'élément plat (22) dans la direction s'étendant parallèlement aux bords latéraux (28).

2. Marchepied coulissant (20) selon la revendication 1, **caractérisé par le fait que** les barrières (30) présentent chacune une tige de barrière (34) et au moins un bras de barrière (32), dans lequel ledit bras de barrière (32) est logé à pivotement sur ledit élément plat (22) et sur ladite tige de barrière (34) de sorte que la barrière (30) peut être relevée et abaissée.

3. Marchepied coulissant (20) selon la revendication 2, **caractérisé par le fait que** les barrières (30) présentent un élément de direction de barrière (36) qui, au moins dans la première position relevée, est en contact avec le composant fixe du véhicule, dans lequel le composant fixe est disposé de telle manière que, lors de la sortie de l'élément plat (22), avant d'atteindre la position terminale de l'élément plat (22), ledit élément de direction de barrière (36) est déjà maintenu sur le composant fixe et que la continuation du mouvement de sortie de l'élément plat (22) provoque un mouvement de la barrière (30).

4. Marchepied coulissant (20) selon la revendication 3, **caractérisé par le fait que** ledit élément de direction de barrière (36) présente un galet (38) à son extrémité libre, qui est guidé dans une glissière de barrière (40), et que ledit composant fixe est constitué par une butée de fin de course de la glissière de barrière (40) dans la direction de sortie de l'élément plat (22).

5. Marchepied coulissant (20) selon la revendication 3 ou la revendication 4, **caractérisé par le fait que** ledit élément de direction de barrière (36) est réalisé en forme de L.

6. Marchepied coulissant (20) selon la revendication 5, **caractérisé par le fait que**, dans une vue de côté de l'aide à la montée (20), le composant fixe est disposé au-dessous de la glissière de barrière (40) et entre en contact d'en haut avec l'élément de direction de barrière (36).

7. Marchepied coulissant (20) selon l'une quelconque des revendications 1 à 6, **caractérisé par le fait que** ledit au moins un bras de barrière (32) est articulé sur l'un des bords latéraux (28) de telle manière que, dans la deuxième position abaissée, la barrière (30) est située complètement latéralement à côté de l'élément plat (22) et ne dépasse pas la hauteur de l'élément plat (22).

8. Marchepied coulissant (20) selon l'une quelconque des revendications 1 à 7, **caractérisé par le fait qu'**un caisson (26) destiné à recevoir l'élément plat (22) est prévu, à l'intérieur dudit caisson (26) étant disposés la glissière de barrière (40) et/ou le composant fixe.
